# EUROPEAN PATENT APPLICATION

(11) **EP 0 830 927 A2**
(43) Date of publication of application: **25.03.1998**
(21) Application number: 97202828.6
(22) Date of filing: 16.09.1997
(51) Int. Cl.: B29B 9/06, B26F 3/00

(54) **Process and associated apparatus for cutting extruded plastic material into pellets by means of a water jet**

(30) Priority: 24.09.1996 IT MI961959
(71) Applicant: TECHINT COMPAGNIA TECNICA INTERNAZIONALE S.p.A., 20121 Milano (IT)
(72) Inventor: Gheorghita, Victor, Castellanza (Varese) (IT)
(74) Representative: Raimondi, Alfredo, Dott. Ing. Prof.

(57) **Abstract**

Process and associated apparatus for cutting extruded plastic material into pellets, in which said cutting operation is performed by means of a jet of water directed towards the extruded material supplied by an extruding machine.

## Description

The present invention relates to a process and an associated apparatus for cutting extruded plastic material into pellets, in which said cutting operation is performed by means of a jet of water directed towards the extruded material supplied by an extruding machine.

In the technical sector relating to the production of articles made of plastic materials, it is known of the need to provide the raw material in a form which can be easily transported and supplied to the moulding machines; for this purpose, the mixture forming the plastic material is usually extruded by means of vertical or horizontal extruding machines into strands which are then cut into pellets by means of special cutting apparatus.

It is also known that said cutting apparatus function substantially in accordance with two basic principles, i.e. the so-called hot method or cold method, depending on whether cutting of the extruded strand is performed under hot conditions, i.e. immediately after the strand has left the extrusion die with the material still soft, being then cooled and compacted by means of cooling water, or under cold conditions, i.e. with the material, after extrusion, being cooled by passing it through water and then cutting it into pellets.

Examples of apparatus which perform hot-cutting are for example illustrated in IT-1,232,793 in the name of the same Applicant, which describes a so-called front-end cutting apparatus which has rotating cutters coaxially arranged in contact with the die and designed to cut the strand as soon as it emerges from the die itself.

The apparatus which perform cold-cutting, on the other hand, are based substantially on pairs of toothed rollers through which the previously water-cooled extruded strands are made to pass. This latter process is used in practice only for low flow rates on account of the difficulty in controlling the movement of the extruded strands to be pelletized.

All the cutting apparatus of the known type are based, however, on the use of cutting parts made of metallic material and therefore greatly subject to wear due to contact, limiting the duration thereof and hence the performance over time.

In addition to this, the continuous advances made in materials technology have resulted in the creation of plastic materials, of the type which are referred to as being reinforced, for example with glass fibre, having mechanical characteristics far superior to those of traditional plastics, but at the same time causing a further increase in the wear of the cutting materials which basically limits their use to cold cutting alone.

The technical problem which is posed, therefore, is that of providing a process and associated apparatus which allow the cutting, into pellets, of plastic material extruded in the form of strands, without contact of metal parts so as to avoid wear, particularly in connection with materials of the reinforced type, and which at the same time make it possible to dispense with management of the extruded strands to be cut.

Within the scope of this problem a further necessity is that said cutting apparatus should be able to be easily applied to normal extruding machines without complex re-designing and/or adaptation operations.

These technical problems are solved in accordance with the present invention by a process and an associated apparatus for cutting extruded plastic material into pellets, in which said cutting operation is performed by means of a water jet directed towards the extruded material supplied by an extruding machine.

Further details may be obtained from the following description of a non-limiting example of embodiment of the invention provided with reference to the accompanying drawings in which:
- Figure 1: shows a schematic sectional view of an extruding machine with a water-jet device for cutting the extruded strand;
- Figure 2: shows a schematic view, in the direction of the arrow A, of the cutting device according to Fig. 1;
- Figure 3: shows a schematic front view of a first variant of an example of embodiment of the cutting device according to the invention;
- Figure 4: shows a schematic front view of a second variant of an example of embodiment of the cutting device according to the invention;
- Figure 5: shows a schematic front view of a third variant of an example of embodiment of the cutting device according to the invention;
- Figure 6: shows a schematic front view of a further variant of an example of embodiment of the cutting device according to the invention;
- Figure 7: shows a schematic sectional view of a further embodiment of the apparatus according to the invention.

The process for cutting into pellets plastic material in the form of strands according to the invention essentially consists in sending a jet of water towards the strand of material leaving a die or similar means located at the outlet of an extruding machine.

According to preferred embodiments of the process, said water jet is delivered in a direction substantially perpendicular to the direction in which the material emerges from the extruding machine and at a high speed and pressure.

More particularly said speed and pressure are preferably comprised between 200 and 1500 m/sec and 300 and 3000 bar, respectively.

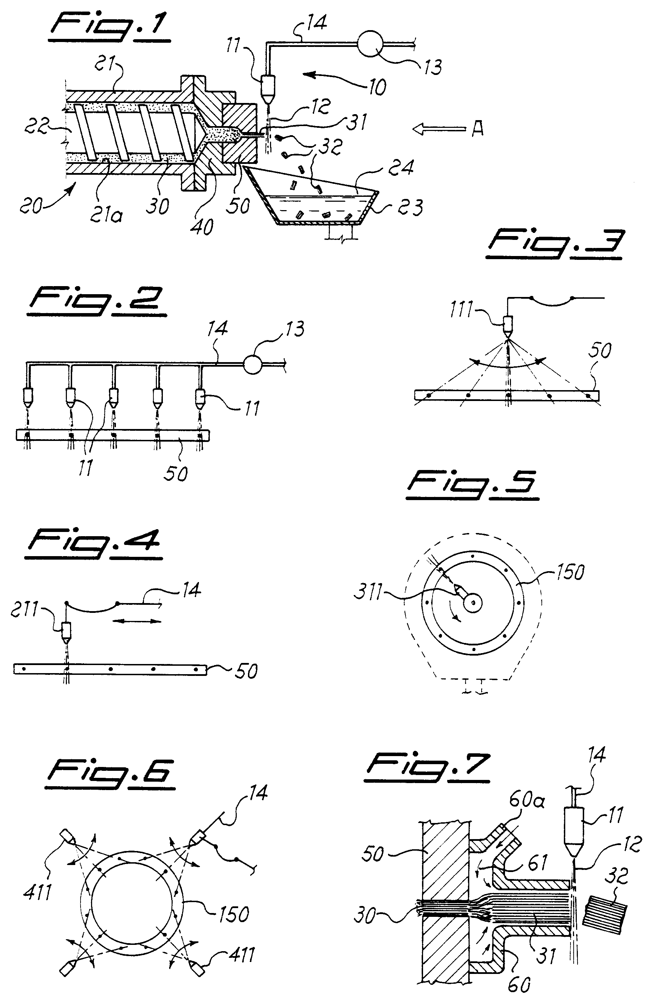

According to the invention and as illustrated in Fig. 1, the cutting device 10, which implements the aforementioned process, is applied to a conventional extruding machine 20 essentially comprising a container 21 defining a chamber 21a having arranged inside it the screw 22 for mixing and feeding the material 30 to the extruding head 40 where there is mounted the die 50 through which the material is passed, said material leaving the die in the form of strands 31 which must be cut into pellets 32.

As illustrated, the cutting device 10 consists of a plurality of nozzles 11 which deliver a jet of water 12 at a high speed and pressure.

Said water 12 is supplied to the nozzles by conventional means, schematically shown in the figures, via a supply pump 13 and a header 14.

In the example shown in Figs. 1 and 2, the nozzles are fixed and therefore the cutting effect is obtained by means of a suitable modulation of the water jet, the intermittent supply of which results in cutting of the strand 31 into pellets 32.

Once cutting has been performed, the pellets 32 fall into a collecting tray 23 containing cooling and conveying water 24.

Figures 3 to 5 show further examples of cutting devices which essentially comprise a single nozzle 111, 211, 311 made to perform uniform movements with a curved, rectilinear or circular trajectory, respectively, while Fig. 6 shows a further example of embodiment of the cutting device consisting of a plurality of nozzles 411 which are separated from one another at suitable angular distances and which each perform an alternating movement along a curved trajectory so as to cover a die segment 150 which, in this case, is circular as in the case of the rotating nozzle 311 of Fig. 5.

In all cases where the nozzle is movable, the water jet may be constant.

Many variants may be introduced as regards the practical implementation of the cutting process according to the invention and the combination of the parts described with reference to the associated apparatus, without thereby departing from the protective scope of the present patent defined by the claims which follow.

The example in Fig. 7 illustrates, for example, a header 60 which has a supply inlet 60a mounted downstream of the die 50 and into which a jet of water 61 is made to flow so as to favour alignment of the extruded strand 31 in a longitudinal feeding direction so as to cause preliminary cooling of the strand itself and facilitate cutting thereof by means of the transverse jet located downstream.

## Claims

1. Process for cutting into pellets plastic material in the form of strands which is supplied by an extruding machine, characterized in that it consists in sending a jet of water towards the strand of material for performing said cutting operation.

2. Process according to Claim 1, characterized in that said water jet is delivered in a direction substantially transverse to the direction in which the material emerges from the extruding machine.

3. Process according to Claim 1 or 2, characterized in that said water jet is delivered in a direction substantially perpendicular to the direction in which the material emerges from the extruding machine.

4. Process according to Claim 1, characterized in that said water jet is delivered at high speed.

5. Process according to Claim 1, characterized in that said speed is comprised between 200 and 1500 m/sec.

6. Process according to Claim 1, characterized in that said water jet is delivered at high pressure.

7. Process according to Claim 1, characterized in that said pressure is comprised between 300 and 3000 bar.

8. Process according to Claim 1, characterized in that the extrusion speed is comprised between 0.3 and 150 cm/sec.

9. Apparatus for cutting into pellets plastic material in the form of strands which is supplied by an extruding machine (20), characterized in that it comprises at least one nozzle (11; 111; 211; 311; 411) delivering a jet of water (12) directed towards the strand (31) of extruded material (30) to be cut into pellets (32).

10. Apparatus according to Claim 9, characterized in that said nozzles (11; 111; 211; 311; 411) are oriented in a direction substantially perpendicular to the direction of feeding of the extruded strand (31) supplied by the extruding machine (20).

11. Apparatus according to Claim 9, characterized in that said nozzles (11) are static.

12. Apparatus according to Claim 11, characterized in that said water jet (12) is modulated.

13. Apparatus according to Claim 9, characterized in that said nozzles (11) are arranged in a rectilinear configuration.

14. Apparatus according to Claim 9, characterized in that said nozzles (111; 211; 311; 411) are movable.

15. Apparatus according to Claim 14, characterized in that said water jet is continuous.

16. Apparatus according to Claim 14, characterized in that said nozzles (211) are made to perform a rectilinear alternating movement.

17. Apparatus according to Claim 14, characterized in that said nozzles (111; 411) are made to perform an alternating movement along a curved trajectory.

18. Apparatus according to Claim 14, characterized in that said nozzles (311) are made to perform a uniform movement along a circular trajectory.

19. Apparatus according to Claim 9, characterized in that it comprises a header (60) arranged downstream of the die (111; 211; 311; 411) for cooling and orienting, in the feeding direction, the extruded material to be cut.
